# EUROPEAN PATENT APPLICATION

(11) **EP 4 767 822 A1**
(43) Date of publication of application: **01.07.2026**
(21) Application number: 24874788.3
(22) Date of filing: 07.10.2024
(51) Int. Cl.: A21C 1/06, A21C 3/04, A21C 5/00

(54) **METHOD FOR DISCHARGING DOUGH**

(30) Priority: 05.10.2023 JP 2023173758
(71) Applicant: Rheon Automatic Machinery Co., Ltd., Utsunomiya-shi, Tochigi 320-0071 (JP)
(72) Inventor: KOITA, Yoshikazu, Utsunomiya-shi, Tochigi 320-0071 (JP); ONOGUCHI, Kazuyoshi, Utsunomiya-shi, Tochigi 320-0071 (JP); KAKIZAKI, Megumi, Utsunomiya-shi, Tochigi 320-0071 (JP)
(74) Representative: Huebner, Stefan Rolf
(86) International application number: PCT/JP2024/035754
(87) International publication number: WO 2025/075189

(57) **Abstract**

The present invention provides a method of discharging continuous dough, by which thickness or density of dough is promoted to be uniformed. The method of discharging continuous dough (D4) with a screw (7) disposed in a discharging cylinder (41) according to the present invention includes supplying a dough ball (D3) between blades (72) of the screw (7), the blades being exposed at an inlet (41a) of the discharging cylinder (41), a size of the dough ball (D3) being smaller than a pitch (P) of the blades (72); and discharging continuous dough (D4) through an outlet (41b) of the discharging cylinder (41).

## Description

### TECHNICAL FIELD

The present invention relates to a method of discharging dough with a dough-pushing screw.

### BACKGROUND ART

Methods of discharging dough, such as bread dough, with a dough-pushing screw is known (Patent Document 1).

### PRIOR ART PUBLICATION

Patent Document 1: Japanese Patent Laid-open Publication No. S60-066932

### SUMMARY OF THE INVENTION

### PROBLEM TO BE SOLVED BY THE INVENTION

In a device described in the Patent Document 1, dough thrown into a hopper may cause a bridge so that the dough is not sufficiently supplied to the screw. As such, discharging dough becomes unstable, and thickness and density of a dough sheet after discharged may not be uniformed.

Thus, an object of the present invention is to provide a dough-discharging method, by which thickness and density of a dough sheet can be promoted to be uniformed.

### MEANS FOR SOLVING THE PROBLEM

In order to achieve the above object, a method of discharging continuous dough with a screw disposed in a discharging cylinder includes: supplying a dough ball between blades of the screw, the blades being exposed at an inlet of the discharging cylinder, a size of the dough ball being smaller than a pitch of the blades; and discharging continuous dough through an outlet of the discharging cylinder.

In the dough discharging device configured in this manner, since the dough ball which size is smaller than the pitch of the blades of the screw is supplied between the blades of the screw, the dough ball can be surely supplied to a space between the discharging cylinder and the screw. As a result, density of the dough discharged from the discharging cylinder becomes stable so that uniformity of thickness or density of a dough sheet can be promoted.

In the method according to the present invention, preferably, the inlet of the discharging cylinder is located at a longitudinal end surface of the blades of the screw so that the dough ball is supplied in a direction of a rotational axis of the screw.

In the method according to the present invention, more preferably, the discharging cylinder extends vertically.

In the method according to the present invention, more preferably, the number of the blades is two or more.

In the method according to the present invention, more preferably, the method further includes cutting an elongated dough by a cutting plate disposed at the inlet of the discharging cylinder, and the blade being rotated.

In the method according to the present invention, more preferably, an outlet gap of the outlet of the discharging cylinder is annular, and the continuous dough is annular.

In the method according to the present invention, more preferably, the annular outlet gap is defined between the discharging cylinder and a nozzle member disposed inside the discharging cylinder, and the method further includes eccentrically rotate the nozzle member relative to the discharging cylinder so that a size of the outlet gap is varied.

### BRIEF DESCRIPTION OF THE DRAWINGS

Fig. 1 is a schematic front view of a dough sheet supplying device including a dough discharging device.
Fig. 2 is a schematic right-side view of the dough sheet supplying device of Fig. 1.
Fig. 3 is a schematic view showing a flow of a dough in the dough sheet supplying device of Fig. 1.
Fig. 4 is a perspective view of a dough spreading device.
Fig. 5 is a perspective view of a dough feeding screw.
Fig. 6 is a cross-sectional view of the dough discharging device.
Fig. 7 is a bottom view of the dough discharging device.
Fig. 8A is a plan view showing an operation of a cutting device.
Fig. 8B is a side view showing the operation of the cutting device.
Fig. 9A is a plan view showing the operation of the cutting device.
Fig. 9B is a side view showing the operation of the cutting device.
Fig. 10A is a plan view showing the operation of the cutting device.
Fig. 10B is a side view showing the operation of the cutting device.
Fig. 11 is a perspective view of an alternative nozzle member.
Fig. 12 is a schematic view showing a flow of the dough in an alternative dough sheet supplying device.
Fig. 13 is a perspective view of an alternative dough spreading device.
Fig. 14 is a cross-sectional view of an alternative dough discharging device.
Fig. 15 is a schematic view of a second alternative dough discharging device.

### DESCRIPTION OF EMBODIMENTS

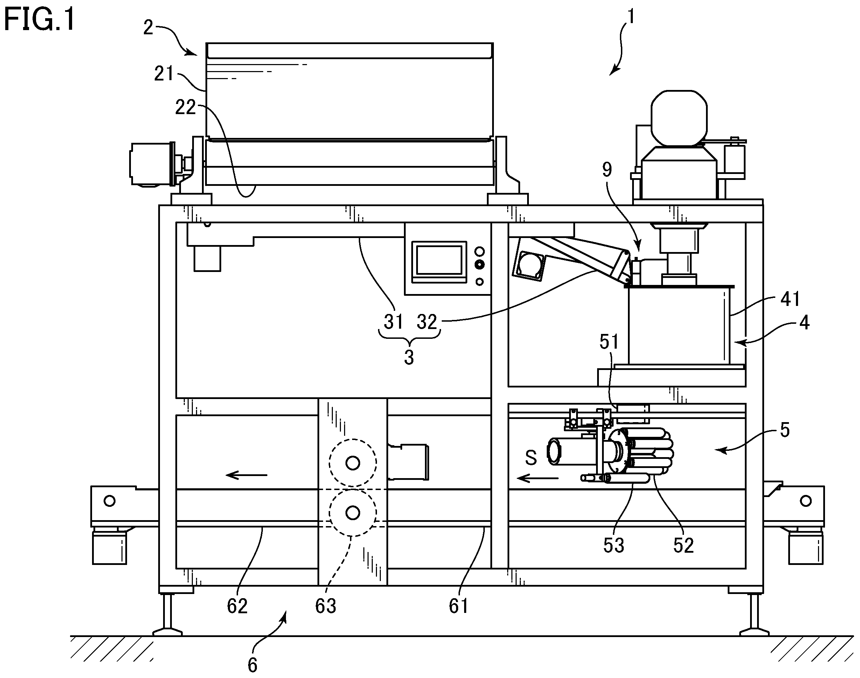

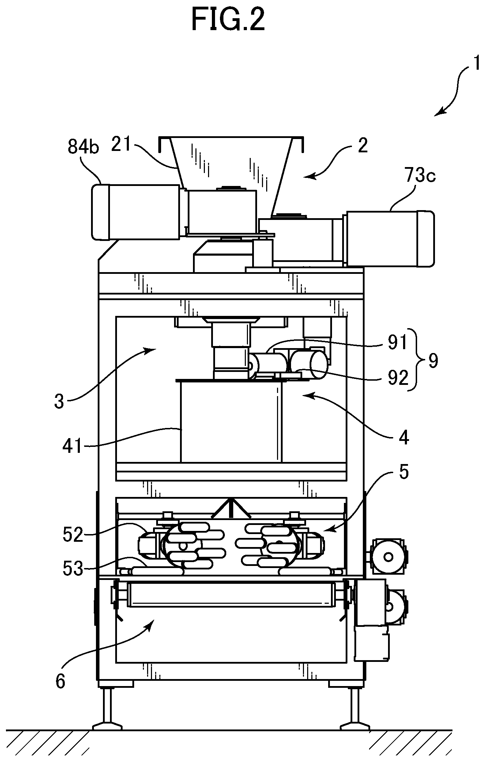

As shown in Figs. 1 to 3, a dough sheet supplying device 1 includes a dough dividing device 2 which divides a mass of dough D1 into an elongated dough D2, a conveying device 3 which conveys the elongated dough D2, a dough discharging device 4 which receives the conveyed elongated dough D2 and discharges an annular dough (continuous dough) D4, a dough spreading device 5 which flattens the annular dough D4 into a dough sheet D5, and a delivering device 6 which delivers the dough sheet D5.

The dough dividing device 2 includes an upper hopper 21 which receives the mass of dough D1, and a cutter 22 which is disposed below the upper hopper 21 and divides a lower portion of the mass of dough D1 into an elongated (rod-like) dough. The cutter 22 is, for example, a pair of rotary blade cutters (so-called star cutters) or a sliding plate cutter.

The conveying dice 3 includes a horizontal first conveyor 31 disposed below the dough dividing device 2, a second conveyor 32 disposed downstream of the first conveyor 31 and inclined downward toward its downstream side, and a sensor (not shown) which detects the dough being conveyed to the dough discharging device 4.

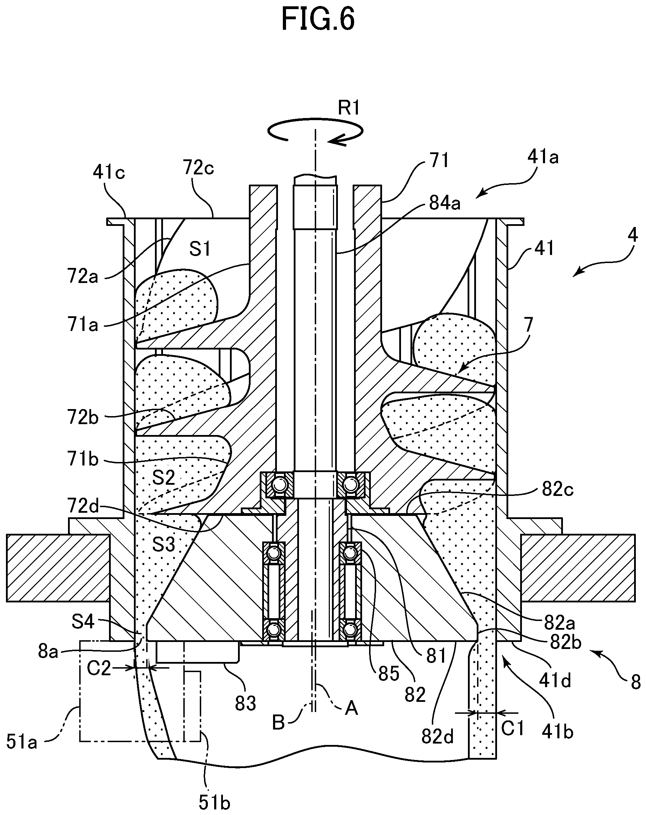

The dough discharging device 4 has a cylindrical hopper (discharging cylinder) 41 which extends vertically and has an inlet 41a and an outlet 41b (see Fig. 6), a dough feeding screw 7 which is disposed inside the hopper 41, an outlet device 8 which is disposed at the outlet (lower end) 41b of the hopper 41 and defines an annular outlet gap 8a (see Fig. 6) between the hopper 41 and the outlet device 8, and a dough cutting device 9 which is disposed at the inlet (upper end) 41a of the hopper 41 and cuts the elongated dough D2 into dough balls (small mass of dough) D3. The dough discharging device 4 will be explained in detail later.

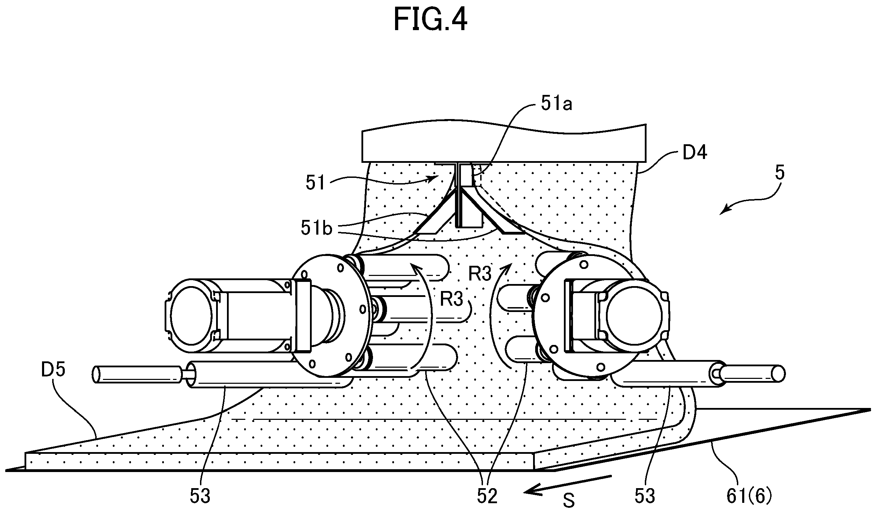

As shown in Fig. 4, the dough spreading device 5 includes a notch portion 51 which makes a notch in one circumferential position (on a downstream side of the delivering device 6) of the annular dough D4, a pair of spreaders 52 and a pair of guide rollers 53 which spread the dough D4 onto the delivering device 6, and a sensor 54 which detects the dough D4. The notch portion 51 includes a first plate-like member 51a which makes a notch in one position of the annular dough D4, and two second plate-like members 51b which extend obliquely downward from the first plate-like member 51a. The spreaders 52 are disposed below and on both sides of the notch portion 51. Each of the spreaders 52 is configured to rotate a plurality of horizontally-extending rollers along a circular orbit in a rotational direction R3. Each of the guide rollers 53 extends horizontally and is disposed at an end of the spread dough and near the delivering device 6. Since the spreaders 52 and the guide rollers 53 have known structures, detailed explanation thereof is omitted.

The delivering device 6 includes an upstream conveyor 61 located below the dough discharging device 4, a downstream conveyor 62 disposed downstream of the upstream conveyor 61, and a pair of gauge rollers 63 disposed between the upstream conveyor 61 and the downstream conveyor 62. The upstream conveyor 61 is configured to receive the spread dough D5 from the above and convey the spread dough D5 in a conveying direction S.

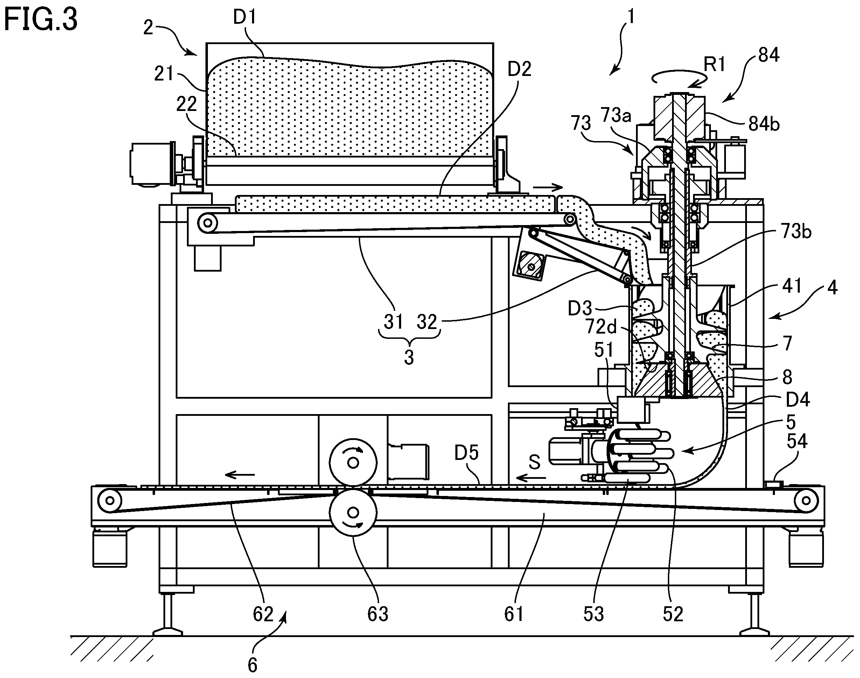

As shown in Fig. 3, the notch portion 51, the pair of spreaders 52, and the pair of guide rollers 53 of the dough spreading device 5 are disposed downstream of the annular dough D4 in the conveying direction S, and are configured to cut and spread the annular dough D4. This allows an inner surface of the annular dough D4 to be an upper surface of the dough D5 on the upstream conveyor 61.

Next, the dough discharging device 4 will be explained in detail.

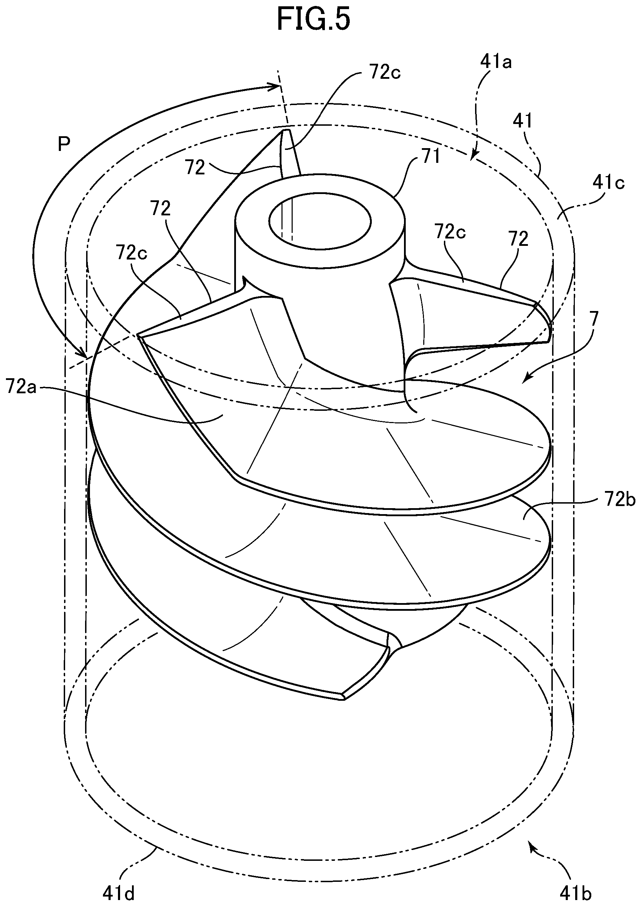

As shown in Figs. 5 and 6, the cylindrical hopper (discharging cylinder) 41 is disposed concentrically with the rotational axis A of the screw 7 and has an upper surface 41c and a lower surface 41d.

The screw 7 includes a hollow rotating shaft 71, three helical blades 72 attached around the rotating shaft 71, and a screw driving unit 73 (see Fig. 3) which is coupled to the rotating shaft 71 and rotates the rotating shaft 71 around the rotational axis A.

An outer diameter of an inlet portion (upper portion) 71a of the rotating shaft 71 is substantially constant, and an outer diameter of an outlet portion (lower portion) 71b of the rotating shaft 71 is tapered to become larger toward the outlet 41b.

An outer diameter of the blades 72 are constant and slightly smaller than an inner diameter of the hopper 41 so that the blades 72 are allowed to be rotated in the hopper 41. Each of the blades 72 includes an inlet portion 72a which is located on an upstream side and has a larger lead angle (for example, 30 degrees or more), and a feeding portion 72b which is located on a downstream side and has a smaller lead angle (for example, 20 degrees or less). The larger lead angle is preferably determined so that the dough ball D3 cut by the dough cutting device 9 can smoothly reach the feeding portion 72b. Each of the blades 72 has an upper surface 72c and a lower surface 72d, which are longitudinal end surfaces. The upper surfaces 72c of the three blades 72 are located in the same horizontal plane. Preferably, the inlet 41a of the hopper 41 is located at the upper surfaces 72c, and the upper surfaces 72c of the blades 72 are located in the same plane as the upper surface 41c of the hopper 41. The lower surfaces 72d of the three blades 72 are located in the same horizontal plane. An inlet space S1 is defined between the inlet portion 72a of the blades 72 and the hopper 41, and a feeding space S2 is defined between the feeding portion 72b of the blades 72 and the hopper 41. The upper surfaces 72c of the blades 72 are exposed at the inlet 41a of the hopper 41. A circumferential pitch P of the blades 72 is a length corresponding to 120 degrees. An opening of the inlet space S1 at the upper surfaces 72c has, for example, a circumferential length of 37 cm and a radial length of 20 cm.

The screw driving unit 73 includes a housing 73a, a hollow shaft 73b which is rotatably supported by the housing 73a and coupled to the rotating shaft 71, and a motor 73c which rotates the hollow shaft 73b.

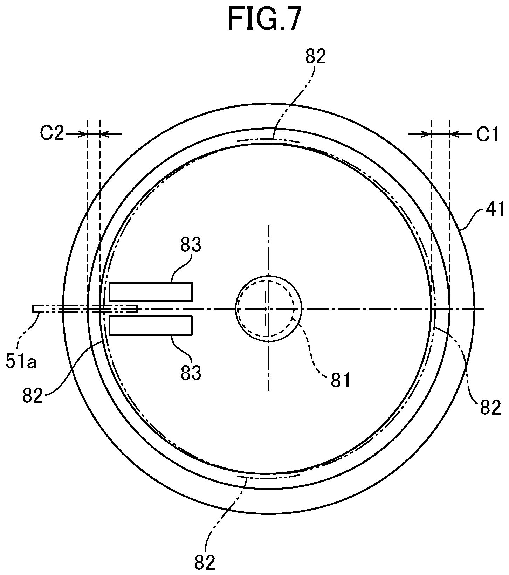

As shown in Figs. 6 and 7, the outlet device 8 includes a cylindrical eccentric collar 81 which eccentrically rotates relative to the rotational axis A of the screw 7, a nozzle member 82 rotatably attached to the eccentric collar 81 via a bearings 85, a rotation prevention member 83 attached to a lower surface 82d of the nozzle member 82, and an outlet driving unit 84 (see Fig. 3) which rotates the eccentric collar 81. The outlet driving unit 84 includes a drive shaft 84a which is coupled to the eccentric collar 81 and extends through the rotating shaft 71 of the screw 7 and the hollow shaft 73b, and a motor 84b that rotates the drive shaft 84a.

The nozzle member 82 includes an upstream diameter-increasing portion 82a and a downstream nozzle portion 82b. Preferably, an outer diameter of the diameter-increasing portion 82a tapers or becomes larger toward the outlet 41b, and is substantially continuous with the outer diameter of the rotating shaft 71 of the screw 7. An outer diameter of the nozzle portion 82b is constant toward the outlet 41b. A pressing space S3 is defined between the diameter-increasing portion 82a and the hopper 41, and a nozzle space S4 is defined between the nozzle portion 82b and the hopper 41. Preferably, the lower surface 41d of the hopper 41 and the lower surface 82d of the nozzle member 82 are located in the same horizontal plane. The annular outlet gap 8a is defined by the hopper 41 and the nozzle member 82. The annular outlet gap 8a includes a maximum gap C1 and a minimum gap C2. An upper surface 82c of the nozzle member 82 is slidable along the lower surface 72d of the blades 72 and is supported in the vertical direction by the bearing 85. This allows the nozzle member 82 to be configured to eccentrically rotate in the hopper 41 so that when the nozzle member 82 rotates once, a position of the maximum gap C1 and a position of the minimum gap C2 also rotate once around the rotational axis A. Namely, an amount of the outlet gap 8a varies between the maximum gap C1 and the minimum gap C2 at any locations. The maximum gap C1 is, for example, 6 to 20 mm, and a variation range between the maximum gap C1 and the minimum gap C2 is, for example, 4 to 10 mm. The rotation prevention member 83 is configured to prevent the nozzle member 82 from rotating on its own axis by cooperating with the first plate-like member 51a of the dough spreading device 5. A rotational speed (for example, 100 to 400 rpm) of the nozzle member 82 (eccentric collar 81) is preferably larger than a rotational speed (for example, 10 to 40 rpm) of the screw 7.

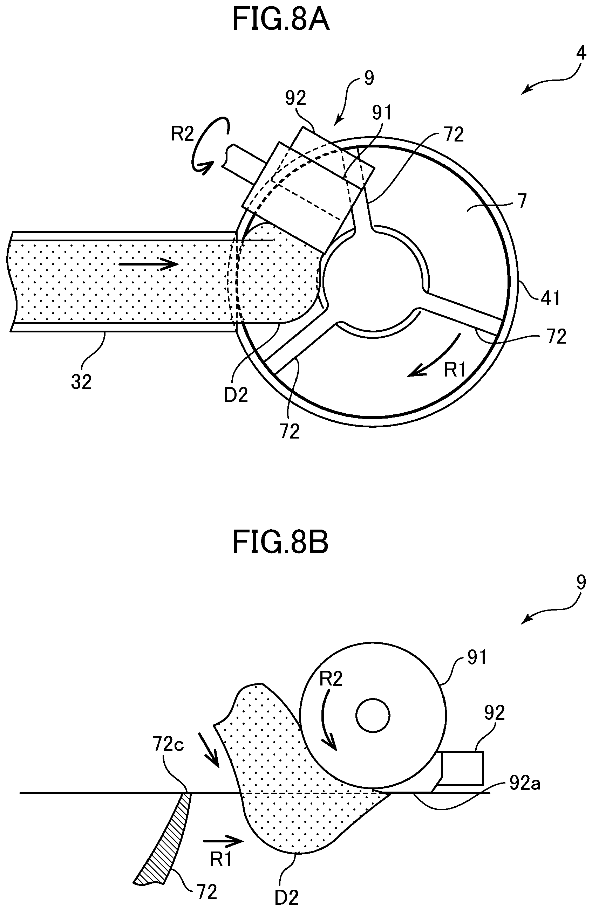

As shown in Figs. 8A to 10B, the dough cutting device 9, which is disposed at the inlet 41a of the hopper 41, includes a guide roller 91 and a cutting plate 92 disposed adjacent to the guide roller 91. The guide roller 91 is rotatable in a rotational direction R2 about an axis extending in a radial direction of the hopper 41 so that the elongated dough D2 is guided between the adjacent blades 72 (into the inlet space S1), and is obliquely disposed relative to the elongated dough D2. The guide roller 91 includes a lower edge which is located in the same plane as the upper surfaces 72c of the blades 72. The cutting plate 92 includes a lower surface 92a which is located substantially in the same plane as the upper surfaces 72c of the blades 72, and the lower surface 92a is configured to cooperate with the upper surfaces 72c of the blades 72 to cut the elongated dough D2 into the dough ball D3.

Next, an operation of the dough sheet supplying device 1 will be explained.

A mass of dough D1 is thrown into the upper hopper 21 of the dough dividing device 2, and a lower portion of the mass of dough D1 is divided into an elongated dough D2 by using a cutter 22 disposed below the upper hopper 21. A cross section of the elongated dough D2 has, for example, a width of 13 cm and a height of 7 cm, which is smaller than the pitch P of the blades 72. The elongated dough D2 is conveyed to the dough discharging device 4 by the first conveyor 31 and the second conveyor 32.

The elongated dough D2 is supplied to the hopper 41 from the above by the second conveyor 32 which is downwardly inclined. Namely, the dough D2 is supplied in a direction substantially the same as the rotational axis A of the screw 7. When a sensor (not shown) detects that the dough D2 has shifted out from the hopper 41, speeds of the first conveyor 31 and the second conveyor 32 are preferably reduced.

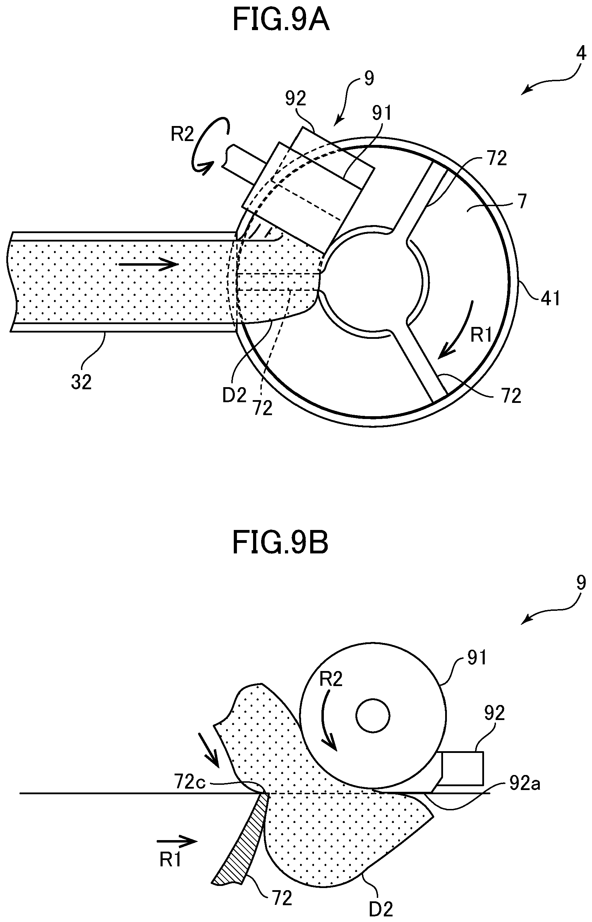

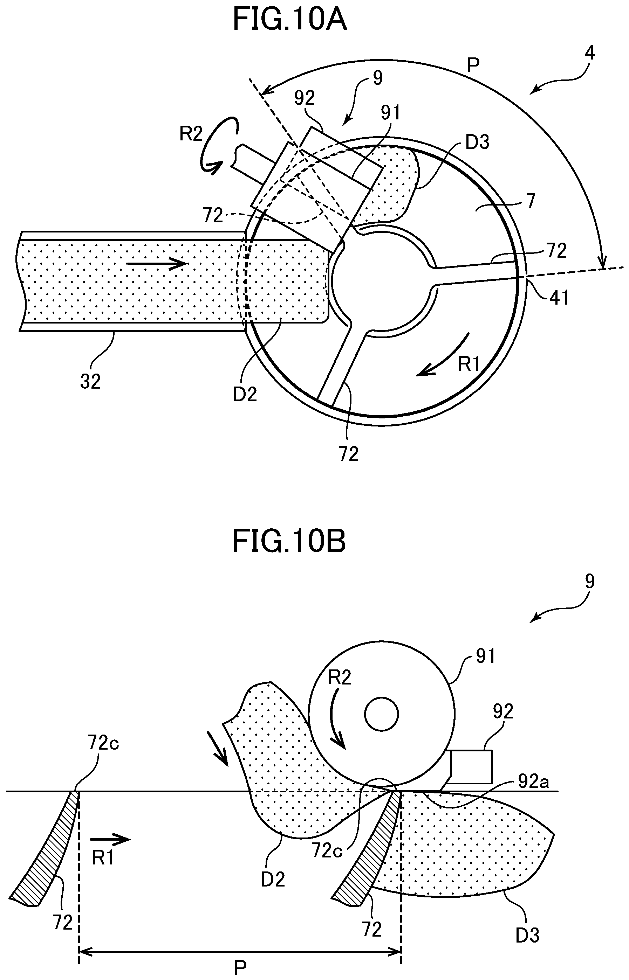

Further, the elongated dough D2 is guided into the hopper 41 by the guide roller 91 (see Figs. 8A and 8B). The elongated dough D2 is directed in a circumferential direction of the hopper 41. After a leading end of the elongated dough D2 enters the space S1 of the hopper 41 (see Figs. 9A and 9B), the elongated dough D2 is cut by the upper surface 72c of the blade 72 rotating at a constant speed and the lower surface 92a of the cutting plate 92 to form a dough ball (small mass of dough) D3 (see Figs. 10A and 10B). This allows the dough balls D3 to be supplied one by one between the blades 72. Namely, the dough balls D3 are supplied substantially in the same direction as the rotational axis A of the screw 7. A size of the dough ball D3 is smaller than the pitch P, and is, for example, 13 x 7 x 18 cm. Since dough ball D3 is smaller than the pitch P of the blades 72 and is supplied between the blades 72 of the screw 7, the dough ball D3 can be reliably supplied into the space S1 between the hopper 41 and the screw 7. As a result, a density of the dough D4 discharged from the hopper 41 is stabilized, and the thickness and density of the dough sheet D5 can be made more uniform.

By dropping the dough ball D3 by its own weight in the inlet space S1, the dough ball D3 is fed to the feeding space S2. Further, the blades 72 push the dough balls D3 in the feeding space S2 and the pressing space S3 toward the outlet 41b. Then, in the pressing space S3 and the nozzle space S4, the dough ball D3 is pressed to closely contact each other and adhere (is bonded to or integrated with) each other.

The eccentric rotation of the nozzle member 82 varies a volume of the pressing space S3 and a volume of the nozzle space S4 (a size of the outlet gap 8a). At a position in which the volume of the pressing space S3 becomes smaller, the integration of the dough is promoted. The dough D4 at the the maximum gap C1 is more easily discharged than that at the minimum gap C2. Since the position of the maximum gap C1 moves circumferentially due to the eccentric rotation, the position in which the dough D4 is more easily discharged also moves circumferentially, so that a circumferential flow of the dough is caused to promote uniformity in the thickness and density of the dough. Further, varying the size of the outlet gap 8a causes an effect like a beating action against the discharged dough D4, to promote uniformity in the thickness and density of the dough D4. As a result, fluctuation of a product weights can be reduced.

A notch of the annular dough D4 is created by the notch portion 51, and the dough D4 is spread by the spreaders 52 and guide rollers 53 to form a dough sheet D5. The dough sheet D5 is supplied onto the conveying surface of the delivering device 6. Then, as shown in Fig. 4, an inner surface of the annularly discharged dough D4 becomes an upper surface. When slack or tension in the dough sheet D5 is detected by the sensor 54, the rotational speeds of the screw 7 and the nozzle member 82 may be increased or decreased. The thickness of the dough sheet D5 is adjusted by the gauge roller 63, and then, the dough sheet D5 is delivered from the downstream conveyor 62.

Although the embodiments of the dough discharging device and method according to the present invention have been described, the scope of the present invention is not limited to the above embodiments, and various modifications are possible without departing from the scope of the present invention.

The dough is not limited to bread dough, and may be pastry dough. The notch of the annular dough D4 may not be created to form a two-layer dough sheet.

Although the discharging cylinder (hopper) 41 extends vertically, it may extend laterally. In this case, the inlet 41a of the discharging cylinder 41 is generally provided on a side of the screw 7, and the blades 72 are exposed to the inlet 41a. The pitch P of the blades 72 is determined linearly. The number of the blades of the screw 7 is three in the above embodiment, but it may be one, two, or more.

In the above embodiment, the dough ball D3 cut from the elongated dough D2 is supplied into the hopper 41, but a pre-formed dough ball D3 may be supplied into the hopper 41. Further, instead of supplying the elongated dough D2 divided by the dough dividing device 2, continuous elongated dough D2 may be supplied.

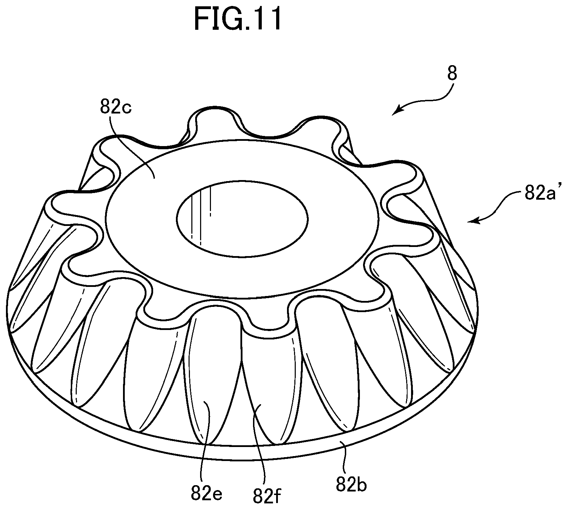

In the above embodiment, the outer diameter of the nozzle portion 82b of the nozzle member 82 is constant toward the outlet 41b, but it may decrease or increase toward the outlet 41b (the lower surface 82d). Further, the outer peripheral surfaces of the diameter-increasing portion 82a and the nozzle portion 82b may include convex portions, for example, in a helical or linear shape, and/or concave portions, for example, grooves or dimples (in a helical or linear shape). For example, as shown in Fig. 11, the diameter-increasing portion 82a' of the nozzle member 82 may include a plurality of concave portions 82e and a plurality of convex portions 82f, which extend linearly and radially, and alternately arranged in the circumferential direction. In this case, the dough ball D3, which enters the concave portions 82e (or sandwiched between the convex portions 82f), is restricted from moving in a circumferential direction relative to the diameter-increasing portion 82a'. This promotes flow toward the outlet 41b and has an effect of making the thickness and density of the dough ball D3 in the pressing space S3 uniform in the circumferential direction. As a result, the thickness and density of the dough D4 discharged from the outlet 41b can be made uniform.

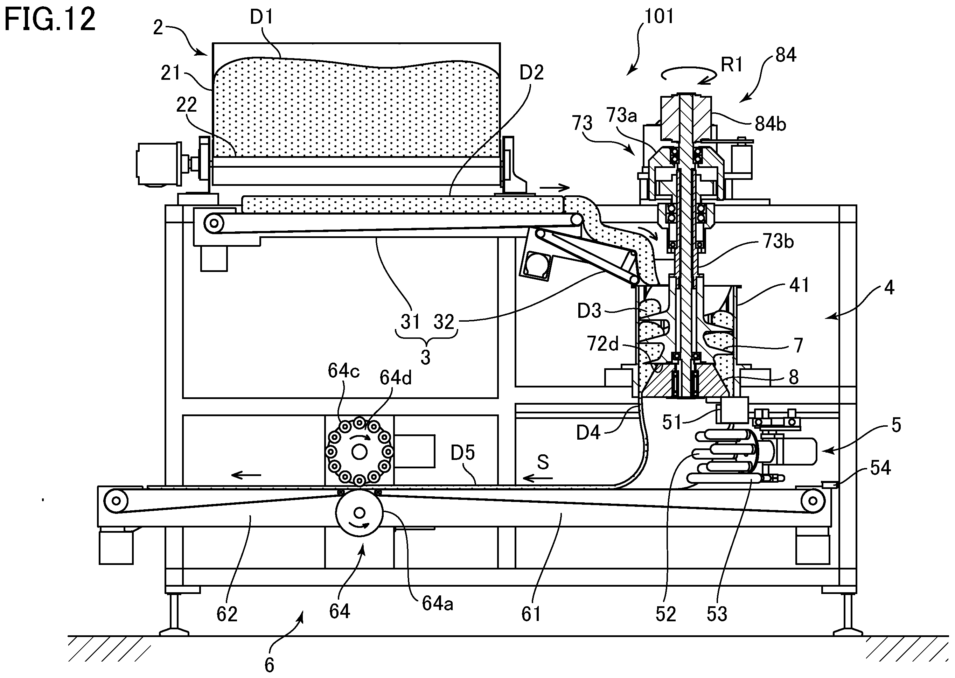

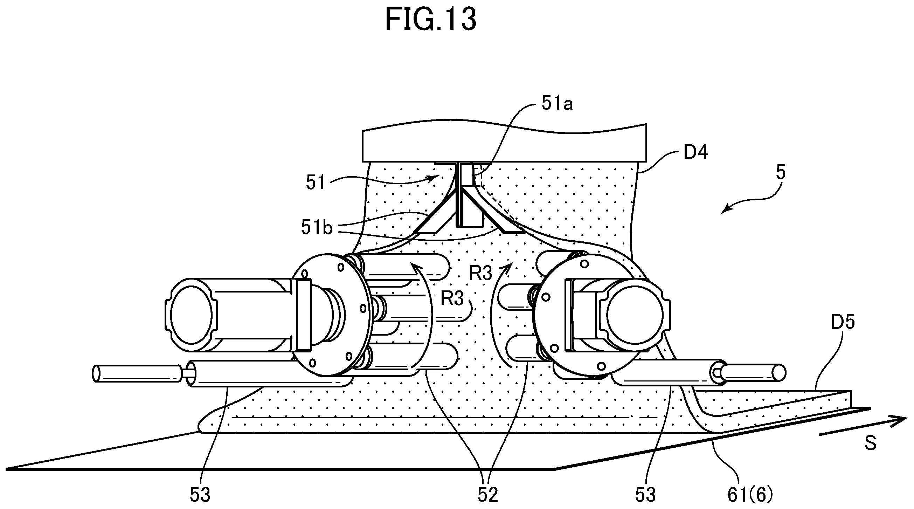

As in an alternative dough sheet supplying device 101 shown in Fig. 12, the notch portion 51, the pair of spreaders 52, and the pair of guide rollers 53 of the dough spreading device 5 may be disposed on an upstream side of the annular dough D4 in the conveying direction S so that the annular dough D4 is cut and spread by pushing. As shown in Fig. 13, this allows the outer surface of the annular dough D4 to become the upper surface of the dough D5 spread onto the upstream conveyor 61. In this way, by changing the position of the dough spreading device 5 depending on properties of the dough, the upper surface of the dough D5 spread onto the upstream conveyor 61 may be the inner surface of the annular dough D4 (see Fig. 4) or the outer surface of the annular dough D4 (see Fig. 13).

As an alternative dough sheet supplying device 101 shown in Fig. 12, in the delivering device 6, a multi-roller stretcher 64 may be employed instead of the pair of the gauge rollers 63 in the delivering device 6. The stretcher 64 includes a lower roller 64a disposed below the dough sheet D5, a plurality of extension rollers 64c arranged along a circle above the dough sheet D5, and a driving unit 64d that revolves the extension rollers 64c along the circle. The individual extension roller 64c is freely rotatable while it is revolved. The stretcher 64 may also include a driving unit that forcibly rotates the individual extension roller 64c. The extension efficiency of the dough sheet D5 by the stretcher 64 is expected to be greater than that of the dough sheet D5 by the pair of gauge rollers 63. Thus, the stretcher 64 can cause less damage to the dough sheet D5 than the pair of gauge rollers 63 when the dough sheet D5 thinned to the desired thickness is supplied to the downstream conveyor 62.

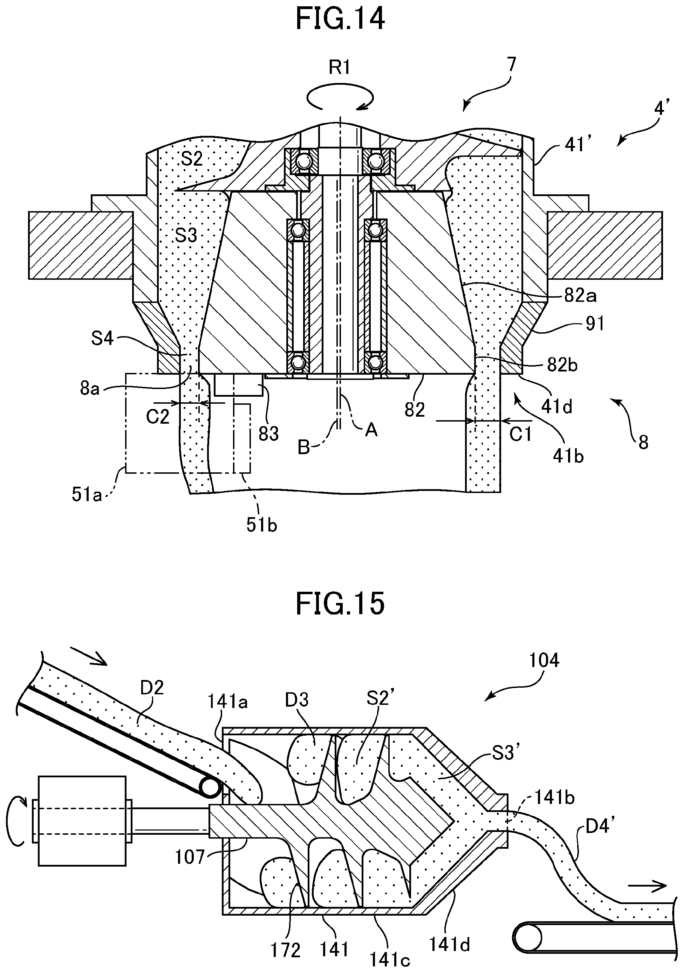

As in the alternative dough discharging device 4' shown in Fig. 14, the outlet portion of the hopper 41' may be configured as a replaceable outer nozzle 91, and the diameter of the outlet 41b may be reduced. This allows the nozzle space S4 to be defined between the nozzle portion 82b and the outer nozzle 91 of the hopper 41'. For example, by replacing the outer nozzle 91 and the nozzle member 82, the outer diameter and the thickness of the annular dough D4 can be arbitrarily changed. Namely, the width and the thickness of the dough sheet D5 can be changed.

In the above embodiments, the continuous dough D4 discharged by the dough discharging device 4 is annular, but it may be a continuous dough D4' having an elongated cross section. For example, a second alternative dough discharging device 104 shown in Fig. 15 includes a hopper (discharging cylinder) 141 laterally extending and having an inlet 141a and an outlet 141b, a dough feeding screw 107 disposed in the hopper 141, and a dough cutting device (not shown) disposed at the inlet 141a of the hopper 141 and cutting the elongated dough D2 into a dough ball (small mass of dough) D3. The hopper 141 includes an inlet-side cylindrical portion 141c and an outlet-side tapered portion 141d. A feeding space S2' is defined between the cylindrical portion 141c and the screw 107, and a pressing space S3' is defined inside the tapered portion 141d. A shaft of the screw 107 may extend inside the tapered portion 141d. In the dough discharging device 104, the rod-like elongated dough D2 is cut by cooperation of the dough cutting device (not shown) and the screw 107 at the inlet 141a to form a dough ball D3, like the dough discharging device 4. This allows the dough balls D3 to be supplied between blades 172 of the screw 107 one by one. The blades 172 push the dough balls D3 toward the outlet 141b in the feeding space S2'. Further, the dough balls D3 are pressed to closely contact each other and then bonded (integrated) in the pressing space S3'. After that, the continuous dough D4' with an elongated (thin plate-like) cross section is discharged through the outlet 141b.

7, 107: screw
8a: annular outlet gap
41, 41', 141: hopper (discharging cylinder)
41b, 141b: outlet
72, 172: blade
72c: upper surface (longitudinal end surface)
82: nozzle member
A: rotational axis
D3: dough ball
D4: annular dough (continuous dough)
D4': continuous dough with an elongated cross section
P: pitch

## Claims

1. A method of discharging continuous dough (D4) with a screw (7) disposed in a discharging cylinder (41, 41', 141), comprising:
supplying a dough ball (D3) between blades (72) of the screw (7), the blades being exposed at an inlet (41a) of the discharging cylinder (41, 41', 141), a size of the dough ball (D3) being smaller than a pitch (P) of the blades (72); and
discharging continuous dough (D4) through an outlet (41b) of the discharging cylinder (41).

2. The method according to claim 1, wherein the inlet (41a) of the discharging cylinder (41, 41', 141) is located at a longitudinal end surface (72c) of the blades (72) of the screw (7) so that the dough ball (D3) is supplied substantially in the same direction as a rotational axis (A) of the screw (7).

3. The method according to claim 2, wherein the discharging cylinder (41, 41') extends vertically.

4. The method according to claim 3, wherein the number of the blades (72) is two or more.

5. The method according to claim 4, further comprising:
cutting an elongated dough (D2) by a cutting plate (92) disposed at the inlet (41a) of the discharging cylinder (41, 41', 141), and the blade (72) being rotated.

6. The method according to claim 5, wherein an outlet gap (8a) of the outlet (41b) of the discharging cylinder (41, 41') is annular, and the continuous dough is annular.

7. The method according to claim 6,
wherein the annular outlet gap (8a) is defined between the discharging cylinder (41, 41') and a nozzle member (82) disposed inside the discharging cylinder (41, 41'),
further comprising: eccentrically rotate the nozzle member (82) relative to the discharging cylinder (4,41') so that a size of the outlet gap (8a) is varied.
